# EUROPEAN PATENT APPLICATION

(11) **EP 3 176 571 A1**
(43) Date of publication of application: **07.06.2017**
(21) Application number: 15198045.5
(22) Date of filing: 04.12.2015
(51) Int. Cl.: G01N 27/12, G01N 27/414

(54) **TWO-DIMENSIONAL ELECTRON GAS SENSOR**

(71) Applicant: IMEC VZW, 3001 Leuven (BE); Stichting IMEC Nederland, 5656 AE Eindhoven (NL)
(72) Inventor: LENCI, Silvia, 3001 Leuven (BE); OFFERMANS, Peter, 3001 Leuven (NL); BROM-VERHEIJDEN, Greja Johanna Adriana, 3001 Leuven (BE)
(74) Representative: DenK iP

(57) **Abstract**

A sensor device (1) is disclosed for sensing a fluid in an adjoining space. The device comprises a substrate (2) and a membrane layer (4) comprising a two-dimensional electron gas (2DEG) layer stack. In the substrate (2), an opening is provided to expose a suspended membrane region (3) of the membrane layer (4). The fluid can interact in a sensing region (12) of the suspended membrane region (3) with a 2DEG formed at a heterojunction interface in the 2DEG layer stack. The device further comprises electrical contacts (10) contacting the 2DEG layer stack. The membrane layer (4) comprises a heater structure (13) for locally heating the sensing region. The membrane layer (4) further has at least one trench, opening or implantation structure (14) provided therein for isolating the 2DEG in at least one part (15,16) of the 2DEG layer stack, such that at least one conductive channel is formed between the electrical contacts (10).

## Description

### Field of the invention

The invention relates to the field of sensors for detecting and/or quantifying a chemical species in a fluid. More specifically it relates to a two-dimensional electron gas sensor for sensing and/or quantifying a fluid, e.g. in a gas, and a related method for manufacturing such device.

### Background of the invention

It is known in the art to use heterojunctions based on nitrides of group III semiconductors (III-N, e.g. GaN, AlN or InN), such as aluminium gallium nitride / galium nitride (AlGaN/GaN) heterojunctions, to fabricate compact, low power consumption fluid sensors. AlGaN/GaN heterojunction may show great promise as a generic platform for (bio-)chemical sensing because of its intrinsic sensitivity to surface charges and dipoles. For example, conductometric gas sensors can exploit the high detection sensitivity of a two-dimensional electron gas (2DEG), which can be induced by polarization at the AlGaN/GaN heterostructure interface, to detect ambient molecules, such as, for example, NO₂, H₂ and CO₂. Furthermore, such gas sensor may advantageously have a high robustness of electrical characteristics at high temperatures. The high detection sensitivity can be achieved by the interaction of the chemical gas species with the sensor surface due to chemisorption, e.g. an analyte-surface reaction involving the exchange of electrons. However, this process typically occurs at high temperatures, e.g. where at lower temperatures, such as at room temperature, physisorption would predominantly occur. It is also known in the art to use a heating element in such gas sensor device to bring the sensor to a suitably high operational temperature, e.g. to promote chemisorption processes.

However, heating elements in gas sensors, as known in the art, may have a disadvantageously high power consumption due to heat loss to the environment. A large portion of this heat loss may typically occur via the substrate of the sensor. In order to reduce the power consumption, the active sensor region, e.g. the region where the interaction of the 2D electron gas occurs with the chemical species of interest in the fluid, should preferably have a weak thermal coupling to the surrounding environment.

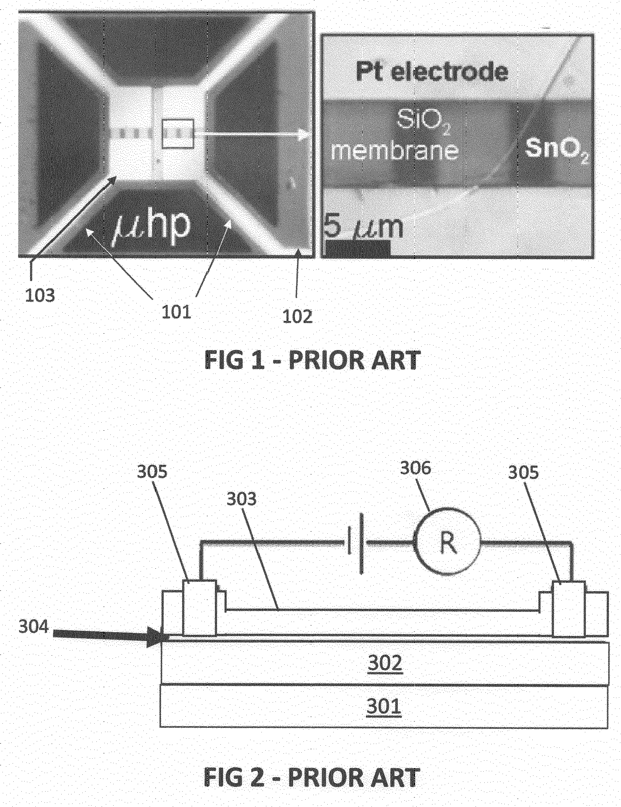

In order to improve the thermal isolation of the active region of the sensor, it is known in the art to use membrane-based sensors. In such sensor, the sensing material is fabricated on a membrane rather than on a solid substrate. The membrane thus reduces the thermal coupling to the substrate by a significant reduction of the contact area with the substrate. Therefore, a reduced heat loss to the substrate can be achieved and an effective and efficient heating of the membrane can be achieved, rather than an inefficient heating over the entire substrate. For example, in such prior-art device, the membrane may be made of SiN and formed by etching away the silicon substrate underneath the membrane layer. Si can be etched selectively to expose the silicon nitride using well-known wet chemical or plasma etch procedures. The contact area can be further reduced by connecting the membrane 103 to the substrate 102 by thin beams 101 as shown in FIG 1. It is furthermore known in the art to fabricate metal heater structures within the membrane and to fabricate the sensing material and contacts on top of the membrane. However, this approach may not be directly applied to GaN based sensors, since the GaN material may need to be grown epitaxially on a Si substrate, e.g. may not be grown on SiN directly.

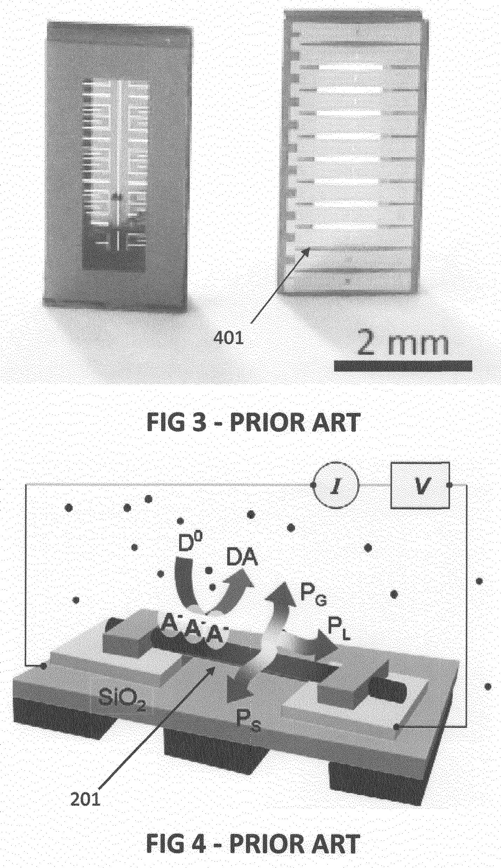

In "Ultra-Sensitive NO2 Detection with AlGaN/GaN 2DEG Channels for Air Quality Monitoring", by Offermans et al., published in Sensors IEEE 2012, another membrane-based GaN sensor is disclosed. FIG 2 schematically illustrates the device layers of this conductometric sensor, which may be read out using a resistance measurement 306 between two ohmic contacts 305. This device enables low-concentration NO₂ detection in ambient air at room temperature by using an ultra-thin AlGaN/GaN heterostructure fabricated on a silicon substrate. A GaN layer 302, e.g. having a thickness of a few µm, and an AlGaN layer 303, e.g. having a thickness in the range of a few nm to tens of nm, e.g. 6 nm to 10 nm, are grown epitaxially on a Si (111) substrate 301, such that a 2DEG 304 can be formed, in operation, near the AlGaN/GaN heterojunction interface. In the presence of humidity, interaction of NO₂ with an open gate area can reversibly change the 2DEG conductivity, which can be detected. Such sensor may have a high sensitivity with good response and recovery times when operating at high temperature, e.g. above about 100° C, as explained hereinabove. The heat for bringing the sensor in this operating temperature range can be supplied by using an external heater. FIG 3 shows a photograph of this sensor, in which the Si substrate was removed below the GaN/AlGaN stack and between the ohmic contacts 305. The remaining stack forms a transparent thin membrane, e.g. with a thickness of at least 1µm, which provides a low heating coupling to the substrate. Prior to substrate removal, a metal heater may be deposited on top of the sensor, which comprises a heater resistor 401 in the shape of a meandering structure. However, as can be seen in FIG 3, the metal heater structure covers the entire membrane, thereby wasting heating power. Furthermore, the heater structure has a significant overlap with the non-membrane parts of the sensor, which leads to further heat-loss.

In another prior-art approach to reduce the thermal coupling of the active sensor area to the substrate, sensors based on nanowires can be used, e.g. the nanowires may be grown on the substrate. These nanowires may be supported, in end regions thereof, by the substrate, while leaving a central portion of the nanowires 201 suspended above the substrate in order to improve the thermal isolation, e.g. as shown in FIG 4. The nanowires are thus supported at their ends, where electrical contacts may be provided. Due to the small thermal capacitance and weak thermal coupling with the substrate, nanowires can achieve a low heat dissipation by self-heating. Therefore, the need to fabricate heater structures can be avoided. Such nanostructures may have typical diameters in the range of tens of nm, and may for example be fabricated from metal oxides or GaN. While such prior-art sensors can potentially achieve a very low power consumption, it is a disadvantage of such devices that difficult fabrication methods may be required to control the nanowire position, geometry, doping and contact properties.

### Summary of the invention

It is an object of embodiments of the present invention to provide good thermal properties and low power consumption in a sensor based on two-dimensional electron gas (2DEG).

The above objective is accomplished by a method and device according to the present invention.

It is an advantage of embodiments of the present invention that a low thermal coupling of an active sensor region to a semiconductor substrate, e.g. a silicon substrate, is achieved in a 2DEG based sensor.

It is an advantage of embodiments of the present invention that a high sensitivity to low concentrations of chemical species of interest in a fluid to be analyzed can be achieved.

It is an advantage of embodiments of the present invention that robust and/or easily controllable fabrication methods can be used to manufacture a good 2DEG based sensor, e.g. a power-efficient 2DEG based sensor.

It is an advantage of embodiments of the present invention that a good 2DEG based sensor, e.g. a power-efficient 2DEG based sensor, can be fabricated using fabrication methods that are compatible with GaN growth requirements.

It is an advantage of embodiments of the present invention that a device in accordance with embodiments can be manufactured by gold-free processing, e.g. using gold-free processing in a 200 mm fab facility.

It is an advantage of embodiments of the present invention that gating effects can be used to induce enhanced recovery.

It is an advantage of embodiments of the present invention that thermal losses can be reduced by isolating the active sensor area.

It is an advantage of embodiments of the present invention that thermal losses can be reduced by perforating and/or segmenting the active sensor area.

It is an advantage of embodiments of the present invention that side-gating and/or back-gating effects in a AlGaN/GaN-based sensor can be advantageously used for gas sensing purposes.

It is an advantage of embodiments of the present invention that easily manufacturable membrane structures can be provided in a 2DEG based sensor that has a good detection sensitivity and a low thermal coupling of the sensor active area to the environment.

It is an advantage of embodiments of the present invention that low thermal dissipation and high sensitivity are provided by a membrane-based sensor that uses openings, e.g. perforations, in the membrane, without requiring complicated process steps. It is a further advantage of such embodiments that strain relaxation by openings in the membrane improves the quality of a 2DEG formed in the sensor, such as to provide a good sensitivity of the device.

It is an advantage of embodiments of the present invention that self-gating effects, in addition to lateral gating, and self-heating can provide a high sensitivity and low power consumption.

It is an advantage of embodiments of the present invention that an analyte of interest can react efficiently in the active region of a membrane-based sensor that uses openings, e.g. perforations, in the membrane, due to a high surface-to-volume ratio and the advantageous exploitation of frontal, lateral and backside gating.

In a first aspect, the present invention relates to a sensor device for sensing at least one fluid in a space adjoining the sensor device. The sensor device comprises a substrate and a membrane layer arranged on the substrate. This membrane layer comprises a two-dimensional electron gas layer stack. An opening is provided in the substrate to expose a suspended membrane region of the membrane layer. The at least one fluid can interact in a sensing region of the suspended membrane region with a two-dimensional electron gas formed at a heterojunction interface in the two-dimensional electron gas layer stack, e.g. in operation of the device. The device further comprises at least two electrical contacts, contacting the two-dimensional electron gas layer stack, for electrically connecting to the two-dimensional electron gas.

The membrane layer further comprises a heater structure for locally heating the sensing region. The membrane layer also has at least one trench, opening and/or implantation structure provided therein for electrically isolating the two-dimensional electron gas in at least one part of the two-dimensional electron gas layer stack in the sensing region, such that at least one conductive channel is formed in the two-dimensional electron gas between the electrical contacts. For example, the membrane layer may have at least one trench, opening and/or implantation structure provided therein for electrically isolating the two-dimensional electron gas in at least two parts of the two-dimensional electron gas layer stack in the sensing region, such that conductive channels are formed in the two-dimensional electron gas between the electrical contacts.

In a device according to embodiments of the present invention, the at least one trench, opening or implantation structure may comprise at least one partial recess.

In a device according to embodiments of the present invention, the at least one trench, opening or implantation structure may comprise an opening fully extending through the membrane layer in the sensing region.

In a device according to embodiments of the present invention, the at least one trench, opening or implantation structure may thermally isolate said at least one part, e.g. the at least two parts.

In a device according to embodiments of the present invention, the heater structure may comprise a local structure in any or each of the at least one part to provide localized heating of the heterojunction near a contact surface where chemical species in the at least one fluid can interact with the electrical properties of the two-dimensional electron gas. For example, 'local' and 'near' may refer to a proximity of the heater structure that is such that, with the designed dimensions and operating conditions, the heater effectively heats the sensing area to a desirable temperature by consuming only a small amount of power. Thus, power wastage by heating other parts besides the sensing area may be reduced or avoided.

In a device according to embodiments of the present invention, the heater structure may comprise at least one conductive path formed by the two-dimensional electron gas in the at least one part.

In a device according to embodiments of the present invention, the at least one part may comprise an elongated beam structure in the two-dimensional electron gas layer stack.

In a device according to embodiments of the present invention, the at least one trench, opening or implantation structure may comprise a trench, opening or implantation structure that has a circular or polygonal shape.

In a device according to embodiments of the present invention, any or each of the at least one part may have a locally perforated or indented structure provided by a further plurality of openings or trenches.

In a device according to embodiments of the present invention, the at least one part may have a width in the range of 20 nm to 200 µm.

In a device according to embodiments of the present invention, the at least one part may comprise a nanochannel segment, e.g. having a width in the range of 10 nm to 1 µm.

In a device according to embodiments of the present invention, the at least one trench, opening or implantation structure may comprise at least a first opening forming elongated beam structures in the two-dimensional electron gas layer stack and a second plurality of trenches or implantation structures forming a conductive nanochannel in the two-dimensional electron gas layer stack, e.g. a nanochannel having a width in the range of 10 nm to 1 µm.

In a device according to embodiments of the present invention, the two-dimensional electron gas layer stack may comprise at least one aluminium gallium nitride (AlGaN) layer and a gallium nitride (GaN) layer forming said heterojunction at an interface thereof.

In a device according to embodiments of the present invention, the heater structure may optionally comprise at least one meandering section located in said suspended membrane region.

In a device according to embodiments of the present invention, the heater structure may comprise, in any or each of said at least one part, at least one conductive path formed by said two-dimensional electron gas.

In a device according to embodiments of the present invention, the heater structure may comprise, in any or each of said at least one part, at least two conductive paths formed by said two-dimensional electron gas, said at least two conductive paths being located on either side of a sensing channel in said part

In a second aspect, the present invention relates to a method for manufacturing a sensor device for sensing at least one fluid in a space adjoining the sensor device. The method comprises providing a membrane layer on a substrate, in which said providing of the membrane layer comprises providing a two-dimensional electron gas layer stack adapted for forming a two-dimensional electron gas at a heterojunction interface in the two-dimensional electron gas layer stack. The method further comprises providing at least one trench, opening and/or implantation structure in the membrane layer for electrically isolating the two-dimensional electron gas in at least one part of the two-dimensional electron gas layer stack in a sensing region. For example, the method may comprise providing at least one trench, opening and/or implantation structure in the membrane layer for electrically isolating the two-dimensional electron gas in at least two parts of the two-dimensional electron gas layer stack from each other in a sensing region. The method also comprises providing at least two electrical contacts contacting the two-dimensional electron gas layer stack, in which these at least two electrical contacts are adapted for electrically connecting to the two-dimensional electron gas. The method further comprises providing a heater structure in the membrane layer for locally heating the sensing region, and providing this sensing region, such that, in operation of the sensor device, the at least one fluid can interact in the sensing region with the two-dimensional electron gas. The method also comprises providing an opening in the substrate to expose a suspended membrane region of the membrane layer, in which the suspended membrane region comprises the sensing region.

In a method according to embodiments of the present invention, providing the heater structure may comprise providing at least one conductive path formed by the two-dimensional electron gas in the at least one part.

In a method according to embodiments of the present invention, providing the at least one trench, opening and/or implantation structure may comprise forming elongated beam structures in the two-dimensional electron gas layer stack.

In a further aspect, the present invention also relates to the use of a sensor device according to embodiments of the first aspect of the present invention for detecting ambient molecules of a predetermined chemical species in a fluid, e.g. in a gas.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

### Brief description of the drawings

FIG 1 shows a membrane sensor known in the art.
FIG 2 schematically illustrates device layers of a conductometric sensor known in the art.
FIG 3 shows a photograph of the conductometric sensor referred to in FIG 2, as known in the art.
FIG 4 shows a sensor based on nanowires as known in the art.
FIG 5 shows a cross-sectional view of a sensor device in accordance with embodiments of the present invention.
FIG 6 shows a top view of a sensor device in accordance with embodiments of the present invention.
FIG 7 shows an trench, opening or implantation structure forming elongated beam structures in a two-dimensional electron gas stack of a device in accordance with embodiments of the present invention.
FIG 8 shows a partial recess formed in a two-dimensional electron gas stack of a device in accordance with embodiments of the present invention.
FIG 9 shows different shapes for openings or trenches, which may be applied in a device in accordance with embodiments of the present invention.
FIG 10 shows a nanochannel formed in a 2DEG stack of a device in accordance with embodiments of the present invention.
FIG 11 illustrates charge (de)trapping at surface/interface states at nanochannel sidewalls in a device in accordance with embodiments of the present invention.
FIG 12 shows a combination of elongated beam structures and nanochannels formed therein, in accordance with embodiments of the present invention.
FIG 13 illustrates a heater structure comprising a conductive path formed in the 2DEGat a heterojunction interface in a device in accordance with embodiments of the present invention.
FIG 14 illustrates a heater structure comprising a conductive path formed in the 2DEG at a heterojunction interface in a device in accordance with embodiments of the present invention.
FIG 15 schematically illustrates a device in accordance with embodiments of the present invention, having a front-side etched cavity underneath the suspended membrane region.

The drawings are only schematic and are non-limiting. In the drawings, the size of some of the elements may be exaggerated and not drawn on scale for illustrative purposes.

Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

In a first aspect, the present invention relates to a sensor device, e.g. a two-dimensional electron gas (2DEG) based conductometric sensor device, for sensing at least one fluid in a space adjoining the sensor device, e.g. for sensing, characterizing or quantifying a gas. The sensor device comprises a substrate and a membrane layer arranged on the substrate. The membrane layer comprises a two-dimensional electron gas layer stack, e.g. a 2DEG stack. An opening is provided in the substrate to expose a suspended membrane region of the membrane layer. The membrane layer, in the suspended membrane region, is adapted to allow the at least one fluid to interact in a sensing region of the suspended membrane region with a two-dimensional electron gas formed at a heterojunction interface in the two-dimensional electron gas layer stack, for example such that molecules of the fluid can measurably alter an electric characteristic of the 2DEG. For example, the 2DEG layer stack may comprise a contact surface in the sensing region that contacts the adjoining space to contact molecules of the fluid to be detected. The device further comprises at least two electrical contacts contacting the two-dimensional electron gas layer stack for electrically connecting to the two-dimensional electron gas, e.g. such as to enable a resistance and/or impedance measurement of the two-dimensional electron gas via the at least two electrical contacts. The membrane layer has at least one trench, opening or implantation structure provided therein for electrically isolating, e.g. for electrically and thermally isolating, the two-dimensional electron gas in at least one part, e.g. in at least two parts, of the two-dimensional electron gas layer stack, e.g. from each other part, in the sensing region such that separate conductive channels are formed in the two-dimensional electron gas between the electrical contacts.

For example, conductive channels may be formed in the 2DEG by etching trenches or openings in the 2DEG, e.g. by locally removing the 2DEG layer material by etching it away, or conductive channels may be formed by implantation of the 2DEG layer material. Such implantation may generate damage within the 2DEG layer material that has the effect of destroying the 2DEG, e.g. by locally preventing electrical conduction. For example, implantation may form conductive channels without removing material from the 2DEG layer.

The trench, opening or implantation structure may thus be provided for isolating the two-dimensional electron gas layer stack in a single part, e.g. a beam, or for creating a plurality of openings or trenches that locally perforate the two-dimensional electron gas layer stack. The membrane layer also comprises a heater structure for locally heating the sensing region.

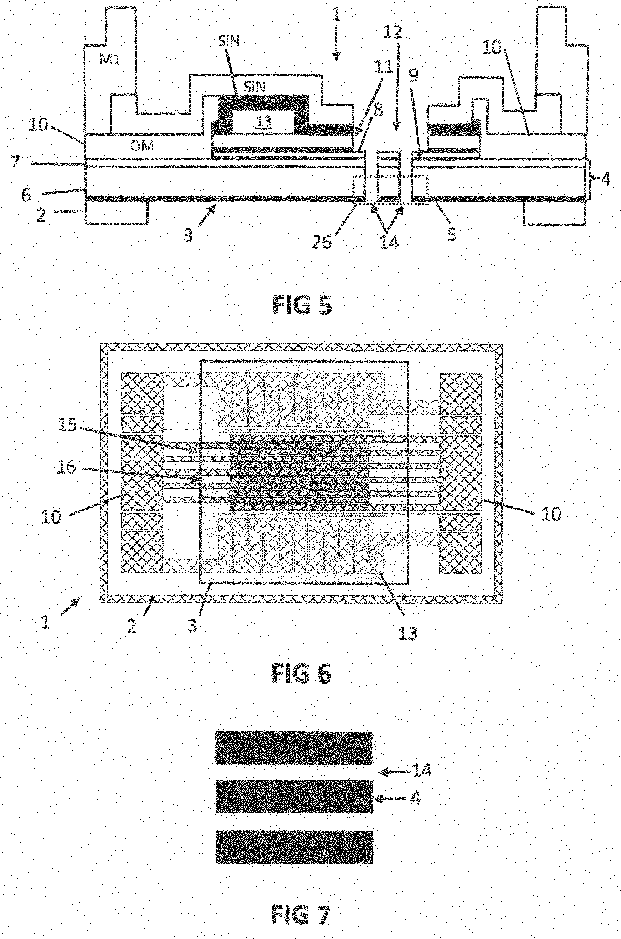

FIG 5 and FIG 6 show respectively a cross-sectional view and a top view of a sensor device 1 in accordance with embodiments of the present invention. The sensor device 1 comprises a substrate 2, e.g. a semiconductor substrate, such as a silicon (Si) substrate, e.g. a silicon wafer. For example, the substrate may be a <111> Si substrate, a silicon carbide (SiC) substrate, or another suitable as known in the art suitable for semiconductor processing, e.g. sapphire. The substrate, e.g. a <111> Si substrate, may have a thickness of at least 500 µm, e.g. 800 µm, or preferably at least 1000 µm, e.g. 1150 µm, or even a higher thickness, e.g. 2000 µm.

The device further comprises a membrane layer 4. The membrane layer may be provided on the substrate, e.g. provided directly on top of the substrate. The membrane layer may have been grown epitaxially on the substrate during manufacture. The membrane layer 4 may have a thickness in the range of 1 µm to 10 µm, e.g. in the range of 2 µm to 5 µm, for example, 4 µm.

The membrane layer 4 comprises a two-dimensional electron gas (2DEG) layer stack, for example an AlGaN/GaN stack. The two-dimensional electron gas stack may comprise an 2DEG single heterojunction (SH) stack, or the two-dimensional electron gas stack may comprise an 2DEG double heterojunction (DH) stack. The two-dimensional electron gas stack may be adapted for inducing a 2DEG by spontaneous piezoelectric polarization of at least one interface between two layers forming an heterojunction, e.g. between an AlGaN layer and a GaN layer. Where reference is made in the present description to AlGaN and GaN, it is to be understood that embodiments of the present invention may equally relate to different materials forming heterojunctions suitable for creating a confined 2DEG, e.g. other III-nitride heterojunctions, such as AlInN/InN.

The membrane layer 4 may comprise a nucleation layer 5, e.g. an aluminium nitride (AlN) nucleation layer, that directly contacts the substrate, e.g. formed on the substrate. The 2DEG stack may be provided on this nucleation layer, e.g. the nucleation layer may be provided in between, and in direct contact with, the 2DEG stack and the substrate. Such nucleation layer may thus improve the lattice matching of a buffer layer, e.g. an AlGaN or GaN buffer layer, of the 2DEG stack to the substrate. For example, the nucleation layer may have a thickness in the range of 50 nm to 500 nm, e.g. in the range of 80 nm to 300 nm, e.g. 100 nm or 200 nm.

For example, the 2DEG stack, e.g. a DH stack, may comprise an AlGaN buffer layer 6 on top of the nucleation layer 5. The AlGaN buffer layer may have a thickness in the range of 1 µm to 10 µm, e.g. in the range of 2 µm to 5 µm, for example, 4 µm or 1.5 µm. A gallium nitride channel layer 7 may be provided on top of the AlGaN buffer layer 6. The GaN channel layer 7 may have a thickness of a few tens or hundreds of nm. For example the GaN channel layer 7 may have a thickness in the range of 50 nm to 300 nm, e.g. 100 nm.

In other embodiments, the 2DEG stack, e.g. a SH stack, may comprise an GaN buffer layer on top of the nucleation layer. This GaN buffer layer may be a GaN channel layer 7, e.g. a 2DEG gallium nitride channel may be formed in the GaN buffer layer. Such GaN buffer layer may have a thickness in the range of 1 µm to 10 µm, e.g. in the range of 2 µm to 5 µm, for example, 4 µm or 1.5 µm.

The 2DEG stack may further comprise an AlGaN barrier layer 8 on top of the GaN channel layer 7. The 2DEG stack may be adapted for allowing the formation of a 2DEG in the GaN channel layer 7 at the interface with an AlGaN barrier layer. The AlGaN barrier layer may have thickness in the range of a few nm to tens of nm, e.g. in the range of 6 nm to 20 nm, e.g. 10 nm.

Between the AlGaN barrier layer 8 and the GaN channel layer, an interlayer may be provided, e.g. an AlN spacer layer. This interlayer may have a thickness in the range of 0 to 3 nm, e.g. 1 nm.

The membrane layer may further comprise a dielectric capping layer 11 on top of the 2DEG stack, e.g. provided on the AlGaN barrier layer, for example a GaN or SiN layer. For example, a silicon nitride (SiN) layer having a thickness in the range of 3 nm to 200 nm, e.g. 10 nm, 20 nm, 50 nm, 100 nm or 140 nm. For example, the dielectric capping layer may comprise SiN deposited by Rapid Thermal Chemical Vapor Deposition (RTCVD) on in-situ SiN, at least partially covering the 2DEG stack.

The device may also comprise at least two electrical contacts 10 that contact the 2DEG stack. In embodiments according to the present invention, the at least two electrical contacts 10 may form respectively a source and a drain connection to the 2DEG stack.

For example, a metal stack, such as Ti and Al, may be deposited on top of the capping layer. If the capping layer is too thick for diffusion of Ti, e.g. if it has a thickness of about 200 nm, the capping layer may be opened first. This metal stack may be patterned by lithography and etching. An rapid thermal annealing step may then be used to diffuse (a part) of the Ti and Al layer towards the 2DEG to provide the electrical contact. For example, each contact may comprise a layer of ohmic metal OM contacting the 2DEG channel. The layer of ohmic metal having a thickness in the range of 100 nm to 500 nm, e.g. 200 nm. Such layer of ohmic metal may for example comprise a Si/Ti/Al/Ti/TiN multilayer film (e.g. respectively 5/5/100/20/60 nm thickness), which may advantageously provide a low contact-resistance, non-gold ohmic contact on AlGaN/GaN. However, other layer structures may be used, as known in the art, for example, for similar high-electron-mobility transistor structures (HEMT) grown on a silicon substrate, e.g. a Ta/Si/Ti/Al/Ni/Ta multilayer. A further layer of contact metal M1 may be provided on, and in contact with, this layer of ohmic metal to provide electrical access to the contacts 10 on the integrated device. This further layer may, for example, have a thickness in the range of 150 nm to 2 µm, e.g. 200 nm, 500 nm or 700 nm. The further layer M1 may for example comprise a Ti/Al/Ti/TiN multilayer structure (e.g. respectively 8/650/5/30 nm in thickness).

In the substrate 2, an opening is provided to expose a suspended membrane region 3 of the membrane layer 4. The membrane layer is supported by the substrate 2, e.g. along an edge of the opening in the substrate, such as to suspend the membrane region 3. For example, the opening may be a through-hole exposing a central region, forming the suspended membrane region 3, of the membrane layer from underneath, in which the through-hole fully traverses the substrate to form an opening to both the top of the substrate and the bottom of the substrate, e.g. to the side contacting the membrane layer and to the side opposite to this contacting side, as shown in FIG 5. Furthermore, a further cavity 26 may be formed in the bottom of the membrane layer, e.g. at the side contacting the substrate, in at least a central portion of this suspended membrane region, to locally thin the membrane layer. For example, a back-side etch may be applied in the sensing region, forming a backside recess in the membrane layer, thus thinning down a buffer layer, e.g. a GaN or AlGaN buffer layer 6. It is an advantage of such embodiments that an increase of depletion from the backside can be achieved, e.g. providing a back-gating effect.

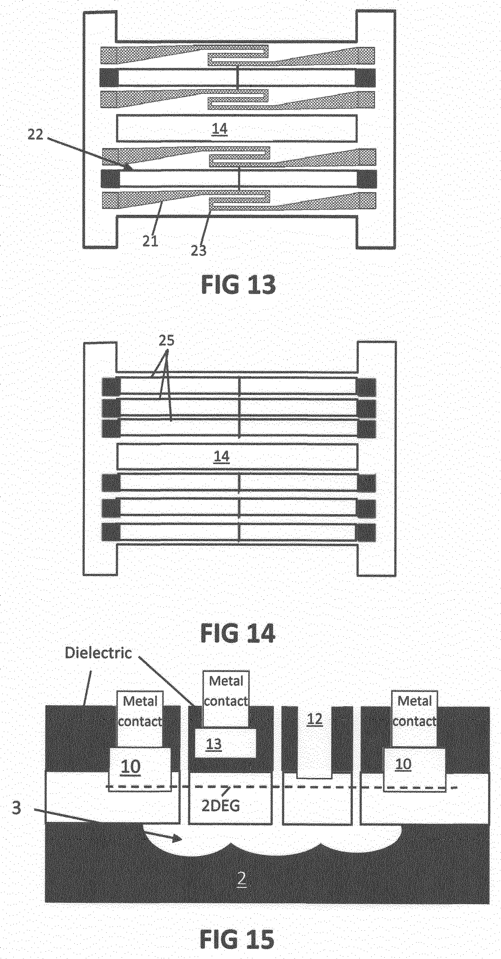

However, the opening may also be a cavity in the substrate that isolates the membrane layer from the substrate in the suspended membrane region, e.g. a central region thereof, in which the cavity does not fully traverse the substrate to form an opening to the bottom of the substrate, e.g. to the side opposite to the side contacting the membrane layer. For example, such cavity, as shown in FIG 15, may be advantageously manufactured using front-side etching.

The substrate may contact the membrane layer in a peripheral region, e.g. a circumferential region with respect to the opening, such as to support the suspended membrane region, e.g. a central region of the membrane layer, while preventing direct physical contact between the membrane layer and the substrate in the suspended membrane region.

The membrane layer 4 furthermore comprises a sensing region 12 in the suspended membrane region 3. This sensing region 12 may be located in between the at least two electrical contacts 10. Furthermore, the 2DEG stack may be open to the environment in this sensing region 12, such as to enable chemical species in the environment to interact with the 2DEG formed at the heterojunction interface.

Embodiments according to the present invention may also comprise a gate and/or gate electrode, as known in the art, for electrostatically controlling an electron density of a two-dimensional electron gas in the 2DEG layer stack. For example, a gate electrode may be used to tune the 2DEG current by depleting and/or enhancing the 2DEG density locally below the gate. This may affect the total device current, and can be used to tune the device to the intended readout process, e.g. tuning the IV characteristics and/or resistance. The sensing region may be exposed, e.g. not covered by a gate structure, such as to allow efficient gas adsorption. Furthermore, a virtual gating effect may be used, in which the field of the gate extends towards the drain, such as to tune the channel depletion of a narrow exposed area. Other gate structures may be used, as known in the art, for example, a suspended gate, in which a micrometer-scale gap is present between gate and surface, or a porous gate, which allows the diffusion of gas between the pores. For example, a catalytic porous gate may be used, as known in the art, to break down molecules at high temperature such that they form dipoles between the gate metal and the channel surface.

In embodiments according to the present invention, the at least two electrical contacts 10 may comprise a set of elongated, interdigitated contacts extending over a substantial portion of the sensing region 12. For example, the interdigitated contacts may be formed in the ohmic metal or the 2DEG layer, and may comprise elongated contacts extending in a first direction, parallel to the substrate, over the sensing region, e.g. covering at least 75%, preferably at least 80%, for example 90%, or 95%, for example 100% of the width of the sensing region in this first direction. In a second direction, parallel to the substrate and substantially orthogonal to the first direction, the contacts of respectively the first and the second electrical contact may alternate in the sensing region to form interdigitated contacts. Such interdigitated contacts may be used, for example, in DC measurement applications, to increase the effective width of the channel by providing multiple contacts that work in parallel, while maintaining a small physical width of the device.

In embodiments according to the present invention, the membrane layer 4 may further comprise a heater structure 13, for example as shown in FIG 6. The heater structure 13 may optionally comprise at least onesection located in the suspended membrane region, e.g. to advantageously increase the conversion of electrical energy of a current applied over this meandering section to heat in the sensing region. The heater structure may be integrated on top of the membrane layer. The heater structure may optionally comprise at least two parts on two sides, e.g. on opposite sides, of at least a central area of the sensing region. the sensing structure, e.g. two conductive paths configured for heating the membrane from either side. The opposite sides may refer to two opposite edges of the sensing region in a plane parallel to the substrate. For example, the heater structure may cover a large portion of the membrane. However, in particularly advantageous embodiments, as discussed hereinbelow, the heater structure may be a local structure in or on the sensing membrane to provide localized heating to the sensing membrane. For example, a low power dissipation to the ambient environment, e.g. to the substrate, can be achieved by focusing the heat deposition on the suspended membrane region, which has a good thermal isolation.

The membrane layer 4 furthermore has at least one trench, opening or implantation structure 14 provided therein for isolating, e.g. for electrically isolating, e.g. for thermally and electrically isolating, at least one part, e.g. two or more parts 15,16, of the 2DEG heterojunction interface in the sensing region, e.g. such as to form at least one conductive 2DEG channel which is isolated, e.g. to form a plurality of conductive 2DEG channels which are isolated from each other, in the sensing area. Electrically isolating may refer to a substantial reduction of conductivity of any direct path in the sensing region between the at least one part and its surroundings, e.g. between the at least two parts 15,16, e.g. a reduction of 75% or higher, preferably of 90% or higher, such as 95% or even higher, e.g. 98% or 99%, such as substantially a 100% reduction, e.g. a reduction to zero conductivity. Thermally isolating may refer to a substantial reduction of thermal conductivity of any direct path in the sensing region between the at least one part and its surroundings, e.g. between the at least two parts, e.g. a reduction of 50% or higher, e.g. 75% or higher, preferably of 90% or higher, such as 95% or even higher, e.g. 98% or 99%, such as substantially a 100% reduction, e.g. a reduction to zero thermal conductivity.

The at least one trench, opening or implantation structure extends from the top side of the membrane layer 4, e.g. the top side being the side of the membrane layer that is opposite of the substrate, to at least a predetermined depth into the GaN channel layer 7 such as to segment a two-dimensional electron gas formed at the heterojunction interface into at least two substantially electrically isolated regions in the sensing region.

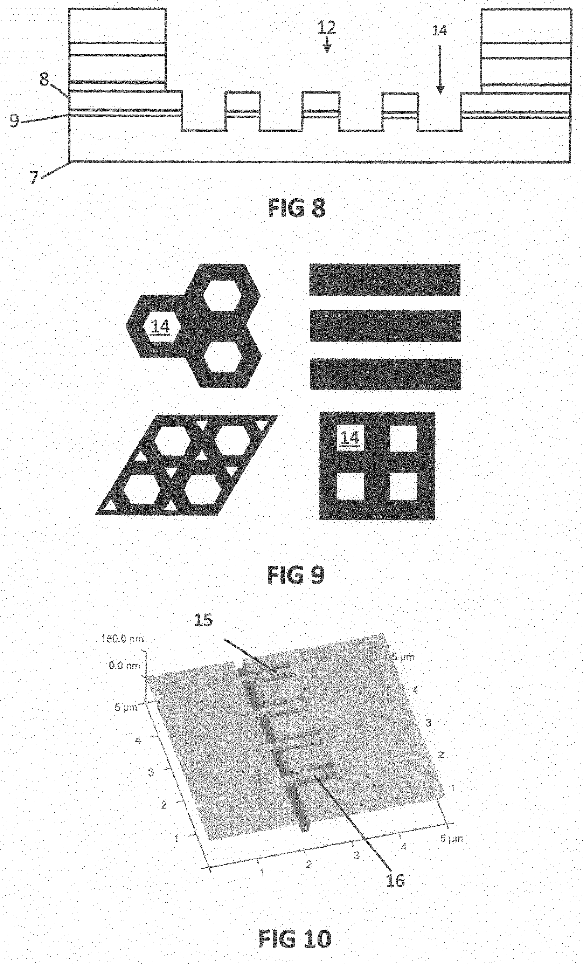

In embodiments according to the present invention, the at least one trench, opening or implantation structure may comprise at least one partial recess, e.g. a recess through the AlGaN barrier layer 8 and extending into the GaN layer 7, e.g. without fully traversing the GaN layer, as shown in FIG 8. For example, the at least one trench, opening or implantation structure may comprise at least one etching hole, e.g. a slit, that goes through the membrane layer over only a fraction of the thickness of the membrane layer. It is an advantage of embodiments of the present invention that an increased surface to volume ratio is achieved in the sensing region, thus allowing for an increased surface area over which ambient chemical species of interest can interact with the electrical properties, e.g. the conduction, of the 2DEG formed at, e.g. near, the heterojunction interface.

In embodiments according to the present invention, e.g. as shown in FIG 5, the opening 14 may fully extend through the membrane layer in the sensing region, e.g. the at least one trench, opening or implantation structure 14 may form at least one perforation through the membrane layer 4. Note that FIG 5 represents only a schematic cross-sectional view, and it is not implied that the opening 14 completely severs an electrical connection through the 2DEG between contacts 10 such as to prevent a read-out the sensor, e.g. by resistance measurement between a pair of contacts.

For example, the at least one opening 14 may comprise at least one etching hole, e.g. a slit, that goes through the entire thickness of the membrane layer 4. It is an advantage of embodiments of the present invention that, in addition to an increased surface to volume ratio, a chemical species in a fluid of interest have a good interaction with the electrical properties of a 2DEG formed at the heterojunction interface due to lateral depletion and depletion by backgating. For example, a fluid may interact with side and back surfaces, in addition to top surfaces, of the at least two parts (or the single part) of the 2DEG channel formed by the opening 14, e.g. achieving a sponge effect.

The at least one trench, opening or implantation structure 14 may thermally and electrically isolate at least two parts of the 2DEG heterojunction interface, in which these at least two parts form separate channels. Such channels may have an elongated shape, e.g. in a plane parallel to the substrate. The channels may have a width in the range of 50 nm to 20 µm, e.g. in the range of 200 nm to 10 µm, e.g. In the range of 500 nm to 2 µm, e.g. 1 µm. It is an advantage of embodiments of the present invention that the dimensions of the openings or trenches and of the thus formed 2DEG channels does not require difficult or complex fabrication steps. For example, since the width of the channels, respectively of the openings or trenches, does not require nano-scale manufacture, e.g. a width of less than 50 nm, e.g. less than 10 nm, e.g. less than 5 nm, fabrication can be easily performed and in a CMOS-compatible manner.

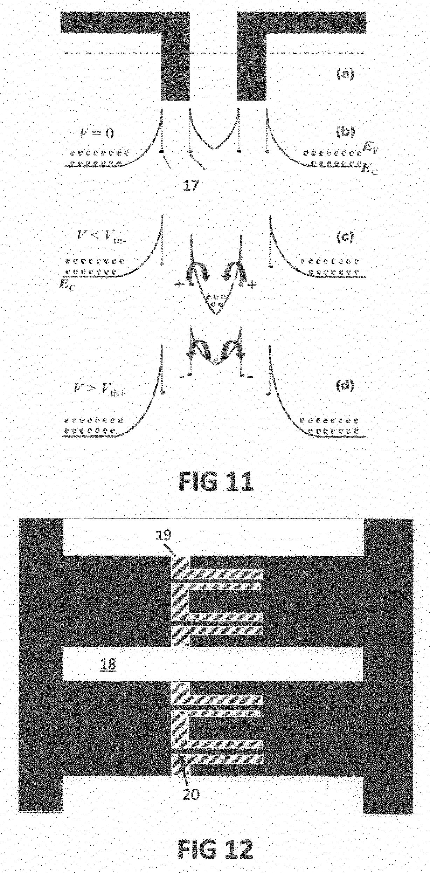

However, reduction of the channel width, e.g. of the at least two parts 15,16, to 1.5 µm or less, e.g. to width in the range of 0 to 1 µm, e.g. in the range of 10 nm to 900 nm, e.g. in the range of 50 nm to 500 nm, may advantageously allow an efficient modulation of channel conductance by self-gating, thus enhancing sensitivity. For example, FIG 10 shows at least some of the at least two parts 15,16 forming conductive channels in the 2DEG that have a width of less than 1 µm, e.g. In the range of 50 nm to 500 nm. These conductive channels may thus be nanochannels. The openings or trenches may comprise openings or trenches having a width of less than 1 µm, e.g. having a width in the same range as described for the nanochannels. It is an advantage of such narrow trenches or openings that, in addition to side gating, a self-gating effect can be achieved to improve sensing performance. Such self-gating effect may furthermore allow additional tuning of the electron density in the nanochannel by a bias voltage, without the need for additional contacts. As the sensing mechanism may involve charge (de)trapping at surface/interface states, side-gating may induce charge (de)trapping, thereby speeding up sensor response and recovery, as illustrated in FIG 11, which shows this (dis)charging of surface states 17 at the nanochannel sidewalls.

The at least one trench, opening or implantation structure may comprise an trench, opening or implantation structure that has an elongated shape, in a plane parallel to the substrate. The at least one trench, opening or implantation structure may form elongated beam structures in the 2DEG stack, as shown in FIG 7. Thus the at least two portions may correspond to these elongated beam structures in the 2DEG stack. These elongated beam structures may provide separate conductive paths between the at least two contacts 10 in the 2DEG region formed at the heterojunction interface. For example, any conductive path connecting a pair of these beam structures may only exist outside the sensing area, e.g. by a common connection outside the sensing area, e.g. to a common M1 terminal. However, such common connection may not be provided, e.g. each beam structure may be connected to a corresponding pair of contacts 10 on either side of the membrane, e.g. such that each contact 10 may only be connected to one corresponding beam structure.

However, the at least one trench, opening or implantation structure may also comprise an trench, opening or implantation structure that has a different shape, e.g. a circular shape, a polygonal shape, such as a triangular shape, a rectangular shape, a trapezoid shape or a hexagonal shape, or a regular polygonal shape, such as a regular hexagonal shape, an equilateral triangular shape or a square shape. Some exemplary shapes are shown in FIG 9. For example, the openings or trenches may form a honeycomb structure in the 2DEG stack. However, different types of openings and trenches may be combined, for example, a locally perforated or indented 2DEG structure, e.g. a honeycomb structure, may be provided by a first plurality of openings or trenches, while a second plurality of openings, or a single second opening, electrically isolates the at least two parts (or one part) of the 2DEG heterojunction interface in the sensing region, e.g. such that at least two beam structures are formed in the 2DEG, each beam structure being locally perforated or indented by the first plurality of openings or trenches. For example, a further plurality of openings and/or trenches may be provided in the at least two parts (or one part). It is an advantage of such further plurality of openings and/or trenches that a further increase of surface to volume ratio can be achieved for increasing the interaction of an ambient fluid with the 2DEG in the sensing region, and that a further increase of thermal isolation can be achieved. Features of the plurality of openings and/or trenches 14, as discussed in the present description hereinabove or hereinbelow, may equally apply to this further plurality of openings and/or trenches.

Different openings and/or trenches may be combined in embodiments of the present invention. For example, FIG 12 shows an advantageous combination of a first opening 18, e.g. at least one through-hole, that forms elongated beam structures in the 2DEG stack, e.g. as also shown in FIG 7, and a second plurality of trenches 19, e.g. trench-type recesses, defined in these elongated beam structures, such as to form conductive channels in the 2DEG that have a width of less than 1 µm, e.g. in the range of 100 nm to 750 nm. The first opening, e.g. a first plurality of openings, may have an elongated shape, in a plane parallel to the substrate. The second plurality of trenches may define at least one conductive nanochannel 20, e.g. thus achieving an advantageous self-gating effect.

In embodiments according to the present invention, the integrated heater 13 may be a local structure in or on the sensing membrane to provide localized heating and low power dissipation to the ambient environment, e.g. to the substrate. Thus, local heating of the 2DEG channels, e.g. formed at the 2DEG heterojunction interface in the at least two parts (or one part), may be applied at the location of the sensing interaction, e.g. near the surface where chemical species in the fluid to be tested can interact with the electrical properties of the 2DEG channels, rather than heating the entire membrane layer. Thus, a high heating efficiency can be achieved.

Where hereinabove reference is made to "near the surface," this refers to a short distance between the location of sensing interaction and a part of the heater structure where a substantial portion of the heat generated by the heater, in operation, is delivered. A substantial portion may refer to at least 75% of the generated heat, preferably at least 90% of the delivered heat, for instance at least 95% of the heat, e.g. at least 98% or 99%, for example substantially 100% of the delivered heat. A short distance may refer to a distance in the range of 0 to 100 µm, preferably a distance in the range of 0 to 20 µm, such as 0 to 10 µm, e.g. 0 to 5 µm, or even less, such as 0 to 1 µm, or advantageously even less than 1 µm. While suitable dimension may depend on design characteristics of specific embodiments, for a 100 nm wide channel, a distance between a heater structure and the channel may for example be about 1 µm. For example, this distance may depend on a selected thickness of a nitride isolation layer. If, for example, at least a part of the heater structure is used to pattern the sensing window directly, the heater to channel distance may even be reduced to substantially zero. For example, only a minimum of isolation may be provided between the heater and the channel to prevent electrical shorts.

The heater structure 13 may comprise at least one conductive path, e.g. formed by a metal layer, provided over the sensing region. The heater structure may optionally comprise a meandering section over the sensing region to increase the local heat generation in this section.

However, in particularly advantageous embodiments, the heater structure 13 may comprise at least one conductive path 21 formed in the 2DEG region formed at the heterojunction interface, in the at least one part, e.g. in the at least two parts. For example, as shown in FIG 13, a conductive path may be formed on either side of a sensing channel 22 in each part, e.g. in the elongated beam structure. While both the conductive path 21 and the sensing channel 22 are embedded in the 2DEG stack, e.g. consist of the GaN material at the heterojunction interface where a two-dimensional electron gas is formed, the conductive path and the sensing channel may be electrically isolated from each other, e.g. by implantation and/or shallow trenches. The at least one conductive path may optionally comprise a meandering section 23 located in the sensing region, e.g. to advantageously increase the conversion of electrical energy of a current applied over this meandering section to heat in the sensing region. Such meandering section may be provided by local electrical isolation of adjacent counter-directed sections of the meandering path, e.g. using a suitable doping pattern or trenches.

The at least one conductive path 21 formed in the 2DEG may be connected to electrical contacts on either side of the path to apply a voltage over the conductive path, such that the sensing region, e.g. the sensing channel 22, is locally heated by a current running through the conductive path.

Furthermore, in particularly advantageous embodiments, at least one trench, opening or implantation structure 14 forms at least two parts of the 2DEG heterojunction interface. In each part, separate channels may be formed, e.g. by locally electrically isolating a plurality of conductive paths 25 in the 2DEG, as shown in FIG 14. These plurality of conductive paths are thus electrically isolated in the sensing region, e.g. such as to prevent a direct electrical connection that is contained within the sensing region between any pair of these conductive paths, but preferably not thermally isolated. For example, each of the at least two parts may be implanted to, at least locally, electrically isolate the conductive paths without significantly affecting the thermal conductance between these paths. Thus, a local self-heating effect of the channels can be achieved, since the channel resistance may be dominated by a voltage drop across the recessed sensing region, such that power dissipation may predominantly occur in and around the sensing region. For example, a heating power of 1 µW per µm² may be provided, e.g. for a 100x100µm surface area, a heating power of 10 µW may be provided.

The plurality of conductive paths 25 may be connected to electrical contacts 10, such that a chemical species in an ambient fluid can be detected by resistance measurement over the contacts 10. For example, a current running through the conductive paths can be measured while applying a voltage drop over the conductive paths. This voltage drop may advantageously simultaneously heat the sensing region locally. The contacts on either side may be interconnected, such as to electrically connect the conductive paths in parallel. However, at least one of the conductive paths may be connected to a separate pair of contacts for applying a heating voltage over this at least one conductive path. Thus, a first voltage may be applied for heating the sensing region by self-heating of this at least one conductive path in the sensing region, while a second voltage may be applied for sensing purposes. Thus, the voltage for conductometric sensing readout and the voltage for heating the membrane in the sensing region may be independently controlled. Furthermore, each of the plurality of conductive paths may have a substantially similar, e.g. the same, shape and dimensions, such that the connections used for heating and for sensing can be used interchangeably. For example, a large voltage may be applied to a majority, e.g. all, of the plurality of conductive paths in an initial phase during operation to bring the device to an operating temperature, while in a sensing phase, only a few of these conductive paths may be used for maintaining a substantially constant operating temperature, while the other conductive paths may be used for sensor readout. In particularly advantageous embodiments, the voltage applied for sensing may however be sufficient to maintain the operating temperature by self-heating, e.g. to elevate the temperature of the sensing region to the operating temperature and maintain the temperature of the sensing region at this operating temperature, such that no separate voltage control of heating may be required, e.g. all of the conductive paths may be connected in parallel.

In a second aspect, the present invention relates to a method for manufacturing a sensor device for sensing at least one fluid in a space adjoining the sensor device, e.g. for manufacturing a sensor device according to the first aspect of the present invention. Specific details of a manufacturing method in accordance with embodiments of the present invention may be understood from the description provided hereinabove in relation to a sensor device in accordance with embodiments of the present invention. Likewise, specific details of a sensor device in accordance with embodiments of the present invention may be understood from the description provided hereinabelow in relation to a method for manufacturing such sensor device.

A method according to embodiments of the present invention comprises providing a substrate, e.g. a silicon substrate.

A method according to embodiments further comprises providing a membrane layer on the substrate. Providing the membrane layer comprises providing a two-dimensional electron gas layer stack. For example, a 2DEG layer stack may be grown epitaxially on the substrate, e.g. on a silicon wafer. The 2DEG layer stack may comprise an AlGaN/GaN stack, e.g. comprising at least a GaN buffer layer and a AlGaN layer on top of the buffer layer. The AlGaN/GaN layer stack may be provided such that a two-dimensional electron gas forms in the GaN buffer layer at the interface with the AlGaN layer. Providing the membrane layer may further comprise capping the 2DEG layer stack, e.g. the AlGaN/GaN stack, with a dielectric capping layer, for example GaN or SiN.

A method according to embodiments further comprises providing at least two electrical contacts contacting the two-dimensional electron gas layer stack for electrically connecting to the two-dimensional electron gas. Providing the at least two electrical contacts may comprise providing at least two separated electrical contacts to the 2DEG layer. For example, a metal stack, for example Ti and Al, may be deposited on top of the capping layer. Such metal stack may be patterned by lithography and etching. For example, a rapid thermal annealing may be applied to diffuse, at least a part of, the metal, e.g. The Ti and AL layer, towards the region where the two-dimensional electron gas is formed, thus providing an electrical contact.

A method according to embodiments further comprises providing a heater structure in the membrane layer for locally heating the sensing region. For example, the heater structure, e.g. a resistive heater structure, may be fabricated on top of the capping layer in the form metal wires, for example made of tungsten or platinum. These metal wires may optionally be meandering metal wires. For example, this fabricating may comprise depositing metal, followed by patterning, e.g. By lithography and etching.

A dielectric, such as SiN, may be deposited, e.g. on top of the surface, covering the metal heater and/or the electrical contacts as protection layer. Contact openings may be etched through the dielectric layer, followed by deposition and patterning of a contact metal.

Providing the heater structure 13 may comprise forming a local structure in each of at least two parts 15,16 of the two-dimensional electron gas layer stack which are electrically separated by at least one trench, opening or implantation structure in the membrane layer, as discussed hereinbelow. This local structure may be adapted for providing localized heating, in the operational device, of the heterojunction near a contact surface where chemical species in the at least one fluid can interact with the electrical properties of the two-dimensional electron gas. Providing the heater structure 13 may comprise forming a conductive path 21 in the two-dimensional electron gas in these at least two parts 15,16.

Providing the heater structure may optionally comprise forming at least one meandering section, e.g. comprising a metal deposited over the 2DEG stack and/or comprising the 2DEG stack material near the heterojunction interface. Providing the heater structure may comprise providing, in each of the at least two parts 15,16, at least two conductive paths formed by the two-dimensional electron gas, such that the at least two conductive paths are located on either side of a sensing channel 22 in this part 15,16.

A method according to embodiments further comprises providing a sensing region in the suspended membrane region, such that the at least one fluid can interact in the sensing region with a two-dimensional electron gas formed at a heterojunction interface in the two-dimensional electron gas layer stack. For example, between the electrical contacts, a sensing window may be created by opening of the dielectric layer and partial recessing of the AlGaN layer.

A method according to embodiments further comprises providing at least one trench, opening or implantation structure in the membrane layer for electrically isolating the two-dimensional electron gas in at least one part of the 2DEG layer stack in the sensing region, e.g. electrically isolating the 2DEG in at least two parts of the two-dimensional electron gas layer stack from each other in the sensing region. Providing the at least one trench, opening or implantation structure may comprise forming separate conductive channels in the two-dimensional electron gas between the electrical contacts, e.g. connecting on either side to a corresponding contact.

For example, providing the at least one trench, opening or implantation structure may comprise patterning the region where the 2DEG is formed as a channel, e.g. between the electrical contacts. Patterning this region may comprise using lithography followed by implantation, e.g. using preferably Ar or N. Such implantation may destroy the 2DEG where not covered by resist. Alternatively, such channel, e.g. between two electrical contacts, may be formed by plasma etching through the 2DEG layer.

Providing the at least one trench, opening or implantation structure may comprise providing at least one partial recess in the membrane layer, e.g. from a top side opposite to the side contacting the substrate. Providing the at least one trench, opening or implantation structure may comprise providing an opening that fully extends through the membrane layer in the sensing region. Providing the at least one trench, opening or implantation structure may comprise providing a trench, opening or implantation structure that thermally isolates the at least one part 15,16.

Providing the at least one trench, opening or implantation structure may comprise forming elongated beam structures in the two-dimensional electron gas layer stack.

Providing the at least one trench, opening or implantation structure may comprise forming an opening or trench that has a circular or polygonal shape.

Providing the at least one trench, opening or implantation structure may comprise providing a further plurality of openings or trenches in each of the at least two parts 15,16 such as to provide a locally perforated or indented structure.

Providing the at least one trench, opening or implantation structure may comprise forming the at least two parts 15,16 such that each part has a width in the range of 50 nm to 20 µm.

Providing the at least one trench, opening or implantation structure may comprise forming a nanochannel segment in the 2DEG stack layer that has a width in the range of 10 nm to 1 µm.

Providing the at least one trench, opening or implantation structure may comprise providing at least a first opening 18 for forming elongated beam structures in the two-dimensional electron gas layer stack and a second plurality of trenches 19 forming a conductive nanochannel 20 in the two-dimensional electron gas layer stack, the nanochannel having a width in the range of 10 nm to 1 µm.

A method according to embodiments further comprises providing an opening in the substrate to expose a suspended membrane region of the membrane layer. For example, by partial removal the substrate, e.g. the Si substrate, a GaN base membrane can be created containing the 2DEG channel with the sensing window and the heater structure. An advantage of such a membrane is to reduce heat loss towards the substrate underneath, enabling a reduction in needed heating power and allowing shorter thermal response times. This substrate can be removed in the suspended membrane region, from the backside or the front side of the sensor device. It is an advantage of frontside removal that a front to backside alignment for the necessary lithography step may not be required, thus may provide a higher accuracy. It is a further advantage of a front side removal that no processing of the wafer upside down may be required, thus reducing a risk of scratching. Another advantage is that a smaller amount of the substrate material may be removed, such that, e.g. if many sensors are manufactured on one wafer, the wafer may be less fragile. Moreover, the process time may be reduced significantly, e.g. from several hours to half an hour.

In a further aspect, the present invention relates to the use of a sensor device according to embodiments of the first aspect of the present invention for detecting ambient molecules of a predetermined chemical species, such as NO₂, H₂ and CO₂, in a gas, e.g. a gas mixture of unknown composition. For example, in a device according to embodiments of the present invention, a sensing layer may be provided on the sensing window, e.g. to increase sensitivity and selectivity for a predetermined chemical species of interest, as is known in the art.

## Claims

1. A sensor device (1) for sensing at least one fluid in a space adjoining the sensor device (1), the sensor device comprising:
- a substrate (2),
- a membrane layer (4) arranged on said substrate (2), said membrane layer comprising a two-dimensional electron gas layer stack, in which an opening is provided in said substrate (2) to expose a suspended membrane region (3) of the membrane layer (4), wherein said at least one fluid can interact in a sensing region (12) of the suspended membrane region (3) with a two-dimensional electron gas formed at a heterojunction interface in the two-dimensional electron gas layer stack; and
- at least two electrical contacts (10) contacting the two-dimensional electron gas layer stack for electrically connecting to said two-dimensional electron gas;
wherein said membrane layer (4) further comprises a heater structure (13) for locally heating said sensing region, and
wherein said membrane layer (4) has at least one trench, opening or implantation structure (14) provided therein for electrically isolating said two-dimensional electron gas in at least one part (15,16) of said two-dimensional electron gas layer stack in the sensing region, such that at least one conductive channel is formed in the two-dimensional electron gas between said electrical contacts (10).

2. The sensor device according to claim 1, wherein the at least one trench, opening or implantation structure (14) comprises at least one partial recess; and/or
wherein the at least one trench, opening or implantation structure (14) comprises an opening fully extending through the membrane layer in the sensing region.

3. The sensor device according to any of the previous claims, wherein the at least one trench, opening or implantation structure (14) thermally isolates said at least one part (15,16).

4. The sensor device according to any of the previous claims, wherein the heater structure (13) comprises a local structure in any or each of said at least one part (15,16) to provide localized heating of said heterojunction near a contact surface where chemical species in said at least one fluid can interact with the electrical properties of the two-dimensional electron gas.

5. The sensor device according to any of the previous claims, wherein the heater structure (13) comprises at least one conductive path (21) formed by said two-dimensional electron gas in the at least one part (15,16).

6. The sensor device according to any of the previous claims, wherein said at least one part (15,16) comprises an elongated beam structure in the two-dimensional electron gas layer stack.

7. The sensor device according to any of the previous claims, wherein the at least one trench, opening or implantation structure (14) comprises a trench, opening or implantation structure that has a circular or polygonal shape.

8. The sensor device according to any of the previous claims, wherein any or each of the at least one part (15,16) has a locally perforated or indented structure provided by a further plurality of openings or trenches.

9. The sensor device according to any of the previous claims, wherein said at least one part (15,16) comprises a nanochannel segment.

10. The sensor device according to any of the previous claims, wherein the at least one trench, opening or implantation structure comprises at least a first opening (18) forming elongated beam structures in the two-dimensional electron gas layer stack and a second plurality of trenches or implantation structures (19) forming a conductive nanochannel (20) in the two-dimensional electron gas layer stack.

11. The sensor device according to any of the previous claims, wherein said two-dimensional electron gas layer stack comprises at least one aluminium gallium nitride (AlGaN) layer and a gallium nitride (GaN) layer forming said heterojunction at an interface thereof.

12. The sensor device according to any of the previous claims, wherein said heater structure (13) comprises at least one meandering section located in said suspended membrane region.

13. The sensor device according to any of the previous claims, wherein the heater structure (13) comprises, in any or each of said at least one part (15,16), at least two conductive paths formed by said two-dimensional electron gas, said at least two conductive paths being located on either side of a sensing channel (22) in said part (15,16).

14. A method for manufacturing a sensor device (1) for sensing at least one fluid in a space adjoining the sensor device (1), the method comprising:
- providing a membrane layer (4) on a substrate (2), wherein said providing of the membrane layer comprises providing a two-dimensional electron gas layer stack adapted for forming a two-dimensional electron gas at a heterojunction interface in the two-dimensional electron gas layer stack;
- providing at least one trench, opening or implantation structure in the membrane layer (4) for electrically isolating said two-dimensional electron gas in at least one part (15,16) of said two-dimensional electron gas layer stack in a sensing region;
- providing at least two electrical contacts (10) contacting said two-dimensional electron gas layer stack, said at least two electrical contacts being adapted for electrically connecting to said two-dimensional electron gas;
- providing a heater structure (13) in the membrane layer for locally heating said sensing region;
- providing said sensing region (12), such that, in operation of the sensor device, said at least one fluid can interact in said sensing region with said two-dimensional electron gas; and
- providing an opening in the substrate to expose a suspended membrane region (3) of the membrane layer (4), said suspended membrane region (3) comprising said sensing region (12).

15. Use of a sensor device according to any of claims 1 to 13 for detecting ambient molecules of a predetermined chemical species in a gas.
